# EUROPEAN PATENT SPECIFICATION

(11) **EP 0 745 319 B1**
(45) Date of publication and mention of the grant of the patent: **17.12.2003**
(21) Application number: 96201479.1
(22) Date of filing: 28.05.1996
(51) Int. Cl.: A01F 15/07, B65G 45/20

(54) **A harvesting machine**
Erntemaschine
Machine de récolte

(30) Priority: 02.06.1995 NL 1000487
(43) Date of publication of application: 04.12.1996
(60) Divisional application: 99202255.8
(73) Proprietor: Greenland Geldrop B.V., NL-5667 KP Geldrop (NL)
(72) Inventor: van den Wildenberg, Leonardus Johannes, 6021 CT Budel (NL)
(74) Representative: Vollebregt, Cornelis Jacobus, Ir.

(56) References cited:
- EP-A- 0 510 499
- EP-A- 0 566 204
- FR-A- 2 575 362
- US-A- 1 659 424
- US-A- 2 829 691
- US-A- 5 097 760

## Description

The invention relates to a harvesting machine intended for processing crop according to the preamble of claim 1 and as known from EP-A-0 510 499.

Many harvesting machines which are used for processing crops have the problem that in particular long-stemmed crops have a tendency to wrap themselves round the guide rollers assisting in the transport of the crop. Although this problem occurs with several different types of harvesting machines, the invention will for the sake of convenience be explained by means of an implementation in harvesting machines intended for rolling crop into bales. The invention is not limited to harvesting machines of that type, however.

Harvesting machines of this kind for forming bales are generally known, for example from European Patents Nos. 0 152 085, 0 201 897, 0 210 898 and 0 210 899 and from DE-OS-3 631 159. Generally two types of harvesting machines of this kind can be distinguished thereby, namely a first type, wherein a plurality of belts arranged in side-by-side relationship are utilized for baling the crop, which belts are passed over a plurality of guide rollers, in such a manner that said belts bound the space in which the crop is rolled into a cylindrical bale, and a type wherein the space in which the bale is formed is bounded by a large number of closely spaced parallel guide rollers for the crop, which guide rollers all make direct contact with the crop. In a baler according to EP-A-0 510 499 there is used a roller cooperating with a guide roller and having a protuding blade helically around the circumference.

There is a danger that the crop will wrap itself round a guide roller, for example near the point where the pick-up means introduce the crop into the space in which the crop is to be rolled into a cylindrical bale. Solutions for this problem have been proposed, whereby a fixedly disposed plate-shaped or strip-shaped scraper is provided near such a guide roller, by means of which scraper any crop adhering to the guide roller in question must be scraped off the respective guide roller. This material will accumulate near the scraper and consequently special measures have to be taken to make it possible to discharge said material accumulating near said scraper, for example providing a screw conveyor disposed near said scraper for discharging the material scraped off the guide roller by said scraper. This leads to complicated constructions, which not only involve additional cost but which also disadvantageously increase the weight of the harvesting machine and make it necessary to make several precise adjustments and/or readjustments.

According to the invention a roller co-operating with said guide roller is provided, whereby at least one of the co-operating rollers is circumferentially provided with at least one outwardly projecting member extending along at least part of the length of the respective roller, which member is at least substantially in contact with the outer circumference of the other roller.

This makes it possible to subject the crop to a drawing, tearing and/or cutting action by means of said projecting member, as a result of which the crop will be prevented from wrapping itself round the guide roller and also round the roller co-operating with said guide roller.

The invention will be explained in more detail hereafter with reference to a number of possible embodiments of the construction according to the invention diagrammatically illustrated in the accompanying Figures.

Figure 1 is a diagrammatic side view of a harvesting machine according to the invention.

Figures 2 - 10 are diagrammatic perspective views of different embodiments of a guide roller and a roller according to the invention which co-operates therewith.

It is noted that like parts are numbered alike in the various Figures.

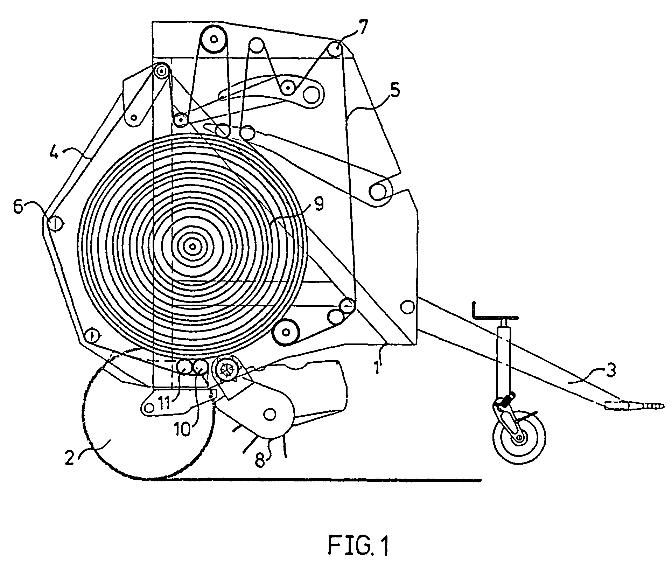

As is schematically shown in Figure 1, a harvesting machine comprises a frame 1, which is supported by ground wheels 2 and which is in the illustrated embodiment provided with a draw arm 3, by means of which the harvesting machine can be hitched to a tractor or similar vehicle. It will also be conceivable, however, for the harvesting machine to be a self-propelled harvesting machine or a mounted harvesting machine.

Two groups of belts 4 and 5 respectively arranged in side-by-side relationship are provided in the frame, whereby belts 4 are passed over guide rollers 6 and belts 5 are passed over a number of guide rollers 7. The harvesting machine is furthermore provided with a pick-up mechanism 8, by means of which crop lying on the ground can be picked up during operation and be supplied to the space bounded by the facing parts of belts 4 and 5, between which the crop can be rolled into a cylindrical bale 9.

The construction of such a harvesting machine as well as the operation thereof are known, both from practice and from a large number of publications such as the aforesaid European patents, so that it will not necessary to give a detailed description of the construction and operation of such a harvesting machine herein.

Furthermore harvesting machines of this type are known wherein no belts are used, but wherein the space in which the crop is to be rolled into a cylindrical bale is bounded by a plurality of spaced-apart guide rollers with which the crop comes into direct contact.

In practice it has become apparent that there is a risk of the crop wrapping itself round a respective guide roller 10, for example at the location of the guide roller 10 that is disposed near the place where pick-up mechanism 8 supplies the crop to the space where the cylindrical bale 9 is to be formed.

In order to prevent this a further roller 11 extending parallel to guide roller 10 and directly co-operating therewith is according to the invention provided near guide roller 10.

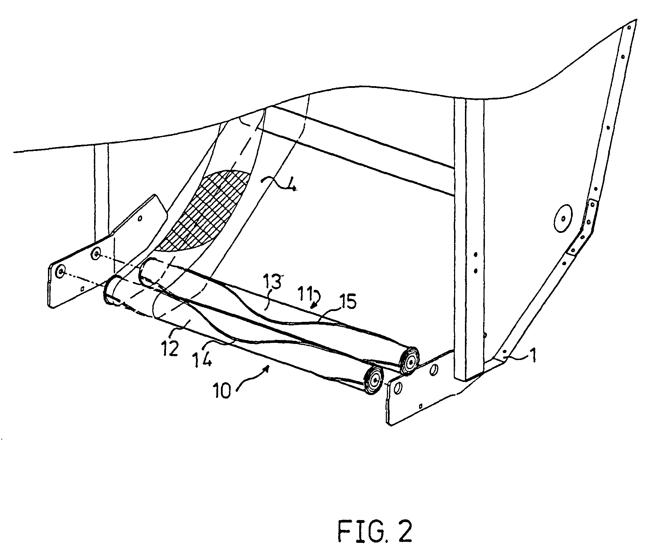

A first embodiment of the co-operating rollers 10 and 11 is shown in Figure 2. As will be apparent from Figure 2, roller 10, which is capable of rotation about its central axis during operation, comprises a cylindrical body 12, whilst roller 11, which is likewise capable of rotation during operation, comprises a cylindrical body 13.

A few projecting members or ribs 14 extending between the ends of cylindrical body 12 are provided on the outer circumference of cylindrical body 12. In the illustrated embodiment the ends of a rib 14 positioned near the ends of body 12 lie on a generating line of the surface of cylindrical body 12, whilst the part of the respective rib 14 positioned therebetween is curved.

Similar projecting members or ribs 15 are provided on the outer circumference of the cylindrical body 13 of the roller 11 that co-operates with guide roller 10.

The two co-operating rollers 10 and 11 can be rotated in the same direction or in opposite directions by suitable transmission means, such as ropes, chains or gears. Preferably said drive takes place by means of (a) belt(s) 4.

Crop attempting to wrap itself round either one of the two rollers will be grasped as a result of the co-operation between the projecting members of the one roller and the surface of the other roller and/or the mutual co-operation of the projecting members of the two rollers, and be shortened as a result of a tearing action to which it is subjected, so that the crop is prevented from wrapping itself round either one of the co-operat i ng rollers, or both, as a result of the reduced length of the crop stems, whilst furthermore the crop will be kept in motion by the projecting members and be flung off the rollers, whereby the shortened crop stems may be discharged, for example between the belts, after being pressed together partly or entirely.

Projecting members or ribs 14 and 15 may be made of a rather hard material, so that said members will carry out some form of cutting operation with respect to the crop, or of a more flexible material, whereby, in particular when the two co-operating rollers 10 and 11 are pressed together with some bias, an intimate contact can be effected between the projecting members and the circumferential surfaces of the cylindrical bodies in order to clamp down the crop parts locally and thus contribute towards the tearing to short pieces of the crop parts.

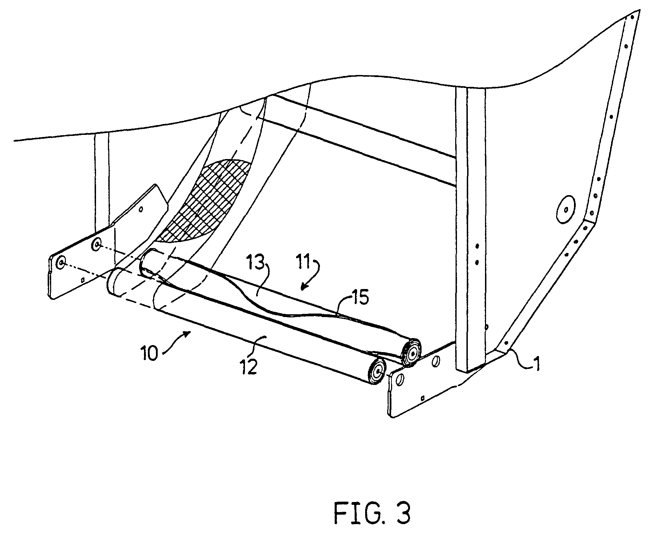

Figure 3 shows a variant of the embodiment shown in Figure 2, wherein only one of the two co-operating rollers, roller 11 in the illustrated embodiment, is provided with a few projecting members or ribs 15. In particular with an embodiment of this type it will generally be preferred to use a flexible material, such as rubber, for the projecting members or ribs 15.

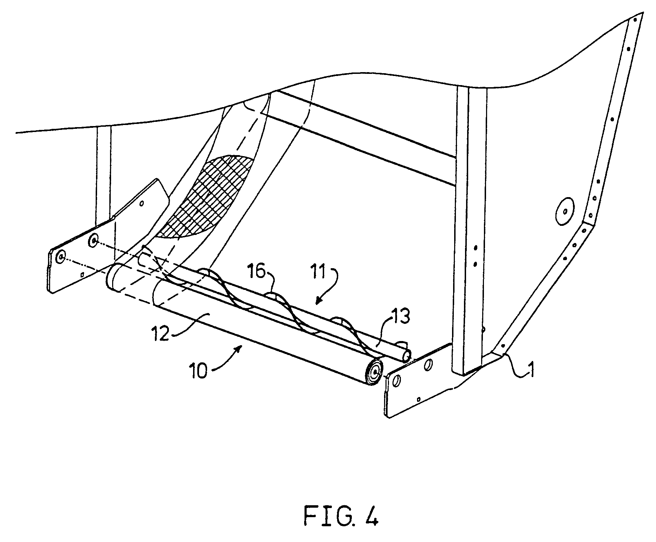

In the embodiment shown in Figure 4 the projecting member is an element 16 which extends helically around roller 11, which element will preferably be made of a slightly resilient material, such as rubber, and abut against the outer circumference of cylindrical body 12 of guide roller 10 with some bias. This construction provides an even better result of pressing. The helical means 16 also makes it possible to subject the crop which may be present between the two rollers 11 to a drawing action. Furthermore said helical means 16 and roller 11 together form some kind of screw conveyor, by means of which a lateral movement of the crop can be effected. Parts of the helical means may also have opposite pitch.

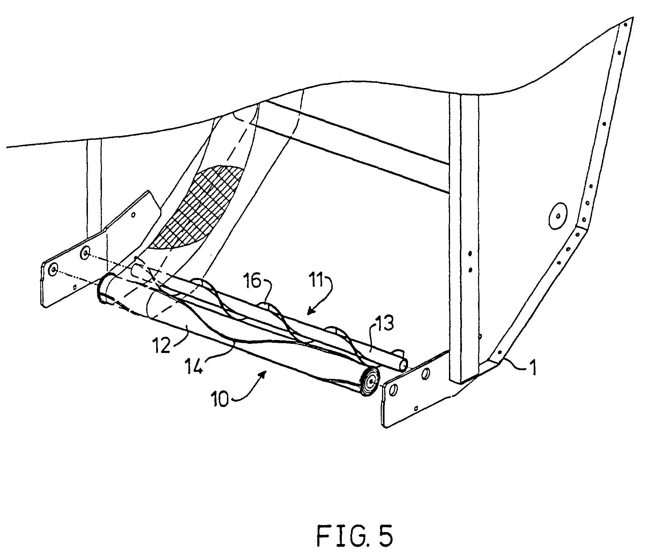

In the variant according to Figure 5 the guide roller 10 co-operating with helical means 16 is provided with a few projecting members or ribs 14 as explained with reference to Figure 2. In this embodiment a very effective co-operation between helical means 16 and projecting ribs 14 may be obtained so as to achieve a particularly effective shortening and transport of any crop present near rollers 10 and 11 which tends to wrap itself round said rollers.

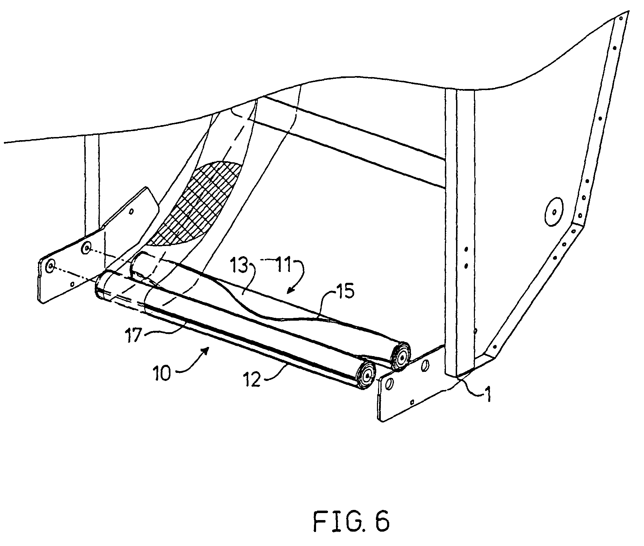

In the embodiment according to Figure 6 a roller 11 comprising projecting ribs 15 in accordance with the embodiment of Figure 2 is used. In this embodiment, however, guide roller 10 is provided with a few projecting members or ribs 17, which extend parallel to the central axis of guide roller 10. Also in this embodiment an effective co-operation between projecting members 16 and 17 may be obtained so as to tear any crop present between the respective rollers to short parts, and the short crop parts thus formed will no longer be able to wrap themselves round the rollers and will fall through the spaces between the rollers and/or between the spaced-apart belts 4.

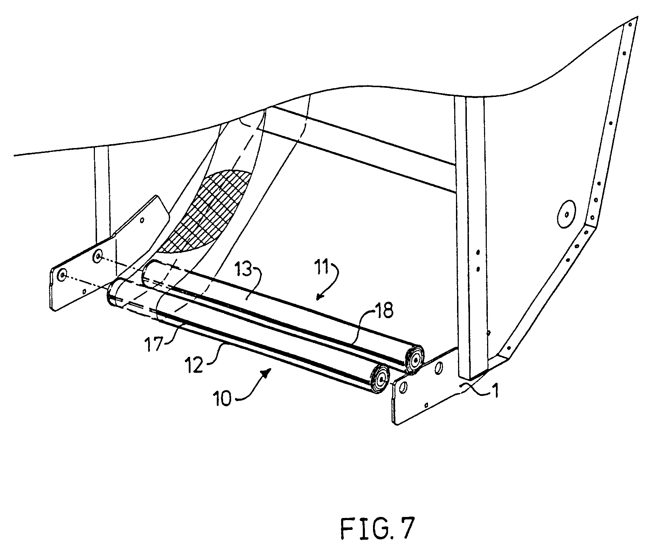

Figure 7 shows an embodiment which uses a guide roller 10 comprising ribs 17 extending in the longitudinal direction thereof, similar to the one used in the embodiment of Figure 6, whilst the further roller 11 is similarly provided with projecting members or ribs 18 extending in the longitudinal direction of the roller. A particularly effective result will be achieved when the two rollers of an embodiment of this type move in the same direction of rotation, so that the strips 17 forming part of guide roller 10 move in a direction opposed to the direction of movement of the strips 18 forming part of roller 11 at the nip between rollers 10 and 11.

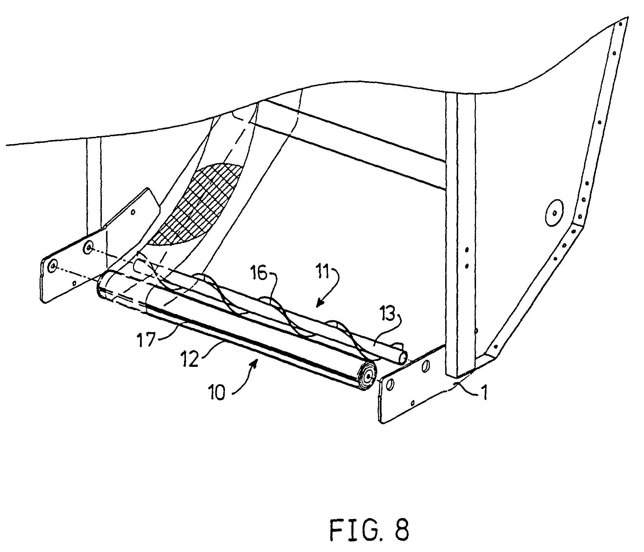

Figure 8 shows an embodiment wherein the roller 11, which is provided with a helical means 16, is combined with a guide roller 10, which is fitted with strip-shaped members 17 extending in the longitudinal direction of said roller. Also in this embodiment the co-operation between projecting members 16 and 17 makes it possible for any crop present near rollers 10 and 11 to be torn to short parts in an effective manner.

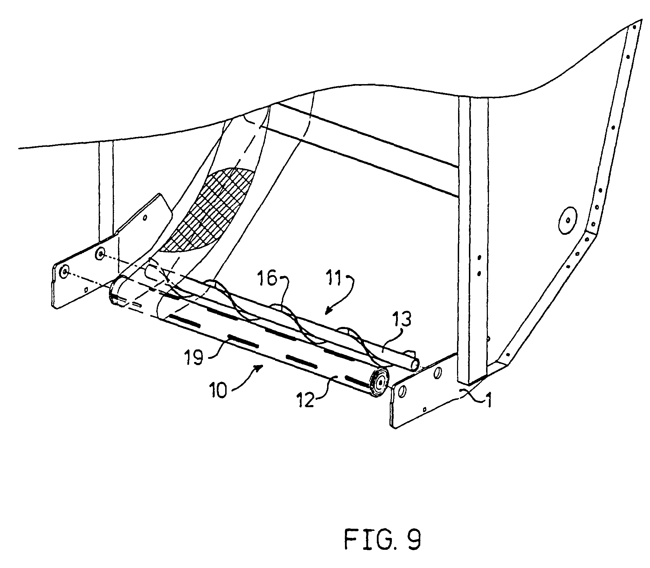

The embodiment shown in Figure 9 largely corresponds with the embodiment according to Figure 8. In this embodiment, however, each elongated projecting member or rib 17 is replaced by a plurality of aligned short projecting members or ribs 19. Preferably two successive (seen in circumferential direction) strip-shaped means 19 are also staggered relative to each other in the longitudinal direction of the respective roller 10, as will be apparent from Figure 9.

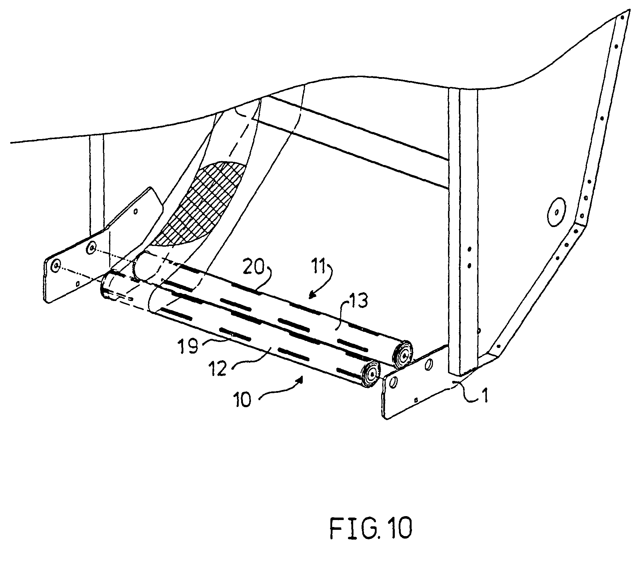

Figure 10 shows yet another embodiment, wherein the guide roller 10 as well as the roller 11 co-operating therewith are provided with spaced-apart projecting members or ribs 19 and 20 respectively extending in the longitudinal direction of the respective roller, whereby several such rows of aligned strip-shaped members or ribs 19 and 20 respectively are distributed over the circumference of the respective roller.

As already said before, the two co-operating rollers 10 and 11 may be rotated in the same direction or in opposite directions. In particular when flexible projecting members or ribs are used, the two co-operating rollers may be driven in such a manner that said rollers do not have the same circumferential velocity if said projecting members or ribs can move "across one another". Another possibility is thereby to have the roller 11 that co-operates with guide roller 10 make a reciprocating movement.

## Claims

1. A harvesting machine intended for processing crop comprising a frame (1), two groups (4, 5) of belts being arranged in a side-by-side relationship, at least one guide roller (10) journalled in said frame (1), which assists in transporting the crop during operation and a roller (11) cooperating with said guide roller (10), whereby at least one of the cooperating rollers (10, 11) is circumferentially provided with at least one outwardly projecting member (14, 15; 16; 17, 18; 19, 20) extending along at least part of the length of the respective roller, (10,11), which member is at least substantially in contact with the outer circumference of the other roller, **characterized in that** the belts of one of the two groups (4, 5) are passed over the cooperating rollers (10, 11).

2. A harvesting machine according to claim 1 **characterized in that** one roller is fitted with several projecting members arranged in spaced-apart relationship in the circumferential direction of said roller.

3. A harvesting machine according to one of the preceding claims **characterized in that** both rollers are fitted with projecting members.

4. A harvesting machine according to any one of the preceding claims, **characterized in that** a projecting member extends helically round the respective roller.

5. A harvesting machine according to any one of the preceding claims, **characterized in that** a projecting member is corrugated.

6. A harvesting machine according to any one of the preceding claims, **characterized in that** a projecting member is rectilinear.

7. A harvesting machine according to any one of the preceding claims, **characterized in that** several projecting members are disposed in spaced-apart relationship, seen in the longitudinal direction of a roller.

8. A harvesting machine according to any one of the preceding claims, **characterized in that** a projecting member is made of a resilient material.

9. A harvesting machine according to any one of the preceding claims, **characterized in that** the two rollers are pressed together with some bias.

10. A harvesting machine according to any one of the preceding claims intended for rolling crop into a cylindrical bale, said harvesting machine being provided with a frame, with pi ck-up means for picking up crop lying on the ground and with means for rolling the picked-up crop into a bale, **characterized in that** said guide roller is a guide roller extending substantially parallel to the central axis of the bale to be formed, which guide roller forms part of said means for rolling the picked-up crop into a bale.

## Patentansprüche

1. Erntemaschine, die für die Verarbeitung von Erntegut bestimmt ist und einen Rahmen (1), zwei Gruppen (4, 5) von Bändern, die nebeneinander angeordnet sind, wenigstens eine Führungswalze (10), die in dem Rahmen (1) gelagert ist und in Funktion unterstützend beim Transport des Erntegutes wirkt, sowie eine Walze (11) umfasst, die mit der Führungswalze (10) zusammenwirkt, wobei wenigstens eine der zusammenwirkenden Walzen (10, 11) am Umfang mit wenigstens einem nach außen vorstehenden Element (14, 15; 16; 17, 18; 19, 20) versehen ist, das sich über wenigstens einen Teil der Länge der entsprechenden Walze (10, 11) erstreckt, und das Element wenigstens im Wesentlichen mit dem Außenumfang der anderen Walze in Kontakt ist, **dadurch gekennzeichnet, dass** die Bänder einer der zwei Gruppen (e, 5) über die zusammenwirkenden Walzen (10, 11) geführt werden.

2. Erntemaschine nach Anspruch 1, **dadurch gekennzeichnet, dass** eine Walze mit mehreren vorstehenden Elementen ausgestattet ist, die in beabstandeter Beziehung in der Umfangsrichtung der Walze angeordnet sind.

3. Erntemaschine nach einem der vorangehenden Ansprüche, **dadurch gekennzeichnet, dass** beide Walzen mit vorstehenden Elementen ausgestattet sind.

4. Erntemaschine nach einem der vorangehenden Ansprüche, **dadurch gekennzeichnet, dass** sich ein vorstehendes Element spiralförmig um die entsprechende Walze herum erstreckt.

5. Erntemaschine nach einem der vorangehenden Ansprüche, **dadurch gekennzeichnet, dass** ein vorstehendes Element gewellt ist.

6. Erntemaschine nach einem der vorangehenden Ansprüche, **dadurch gekennzeichnet, dass** ein vorstehendes Element geradlinig ist.

7. Erntemaschine nach einem der vorangehenden Ansprüche, **dadurch gekennzeichnet, dass** mehrere vorstehende Elemente, in der Längsrichtung einer Walze gesehen, in beabstandeter Beziehung angeordnet sind.

8. Erntemaschine nach einem der vorangehenden Ansprüche, **dadurch gekennzeichnet, dass** ein vorstehendes Element aus einem elastischen Material besteht.

9. Erntemaschine nach einem der vorangehenden Ansprüche, **dadurch gekennzeichnet, dass** die zwei Walzen mit einer bestimmten Spannung zusammengedrückt werden.

10. Erntemaschine nach einem der vorangehenden Ansprüche, die zum Rollen von Erntegut zu einem zylindrischen Ballen bestimmt ist, wobei die Erntemaschine mit einem Rahmen, mit einer Aufnehmeinrichtung zum Aufnehmen eines auf dem Boden liegenden Erntegutes und mit einer Einrichtung zum Rollen des aufgenommenen Erntegutes zu einem Ballen versehen ist, **dadurch gekennzeichnet, dass** die Führungswalze eine Führungswalze ist, die sich im Wesentlichen parallel zur Mittelachse des auszubildenden Ballens erstreckt, wobei die Führungswalze einen Teil der Einrichtung zum Rollen des aufgenommenen Erntegutes zu einem Ballen bildet.

## Revendications

1. Machine de récolte destinée à traiter les cultures comprenant un châssis (1), deux groupes (4, 5) de courroies étant arrangées côte à côte, au moins un rouleau de guidage (10) monté dans ledit châssis (1), lequel aide à transporter les cultures pendant le fonctionnement et un rouleau (11) coopérant avec ledit rouleau de guidage (10), moyennant quoi au moins un des rouleaux coopérants (10, 11) est doté, au niveau de sa circonférence, d'au moins un élément faisant saillie vers l'extérieur (14, 15 ; 16 ; 17, 18 ; 19, 20) s'étirant le long d'au moins une partie de la longueur du rouleau respectif (10, 11), lequel élément est au moins sensiblement en contact avec la circonférence externe de l'autre rouleau, **caractérisée en ce que** les courroies de l'un des deux groupes (4, 5) sont passées au-dessus des rouleaux coopérants (10, 11).

2. Machine de récolte selon la revendication 1, **caractérisée en ce qu'**un rouleau est doté de plusieurs éléments faisant saillie agencés de manière espacée dans la direction circonférentielle dudit rouleau.

3. Machine de récolte selon l'une des revendications précédentes, **caractérisée en ce que** les deux rouleaux sont dotés d'éléments faisant saillie.

4. Machine de récolte selon l'une quelconque des revendications précédentes, **caractérisée en ce qu'**un élément faisant saillie s'étire de manière hélicoïdale autour du rouleau respectif.

5. Machine de récolte selon l'une quelconque des revendications précédentes, **caractérisée en ce qu'**un élément faisant saillie est ondulé.

6. Machine de récolte selon l'une quelconque des revendications précédentes, **caractérisée en ce qu'**un élément f aisant saillie est rectiligne.

7. Machine de récolte selon l'une quelconque des revendications précédentes, **caractérisée en ce que** plusieurs éléments faisant saillie sont agencés de manière espacée, dans la direction longitudinale d'un rouleau.

8. Machine de récolte selon l'une quelconque des revendications précédentes, **caractérisée en ce qu'**un élément faisant saillie est constitué d'un matériau élastique.

9. Machine de récolte selon l'une quelconque des revendications précédentes, caractérisée en que les deux rouleaux sont comprimés ensemble selon une certaine direction diagonale.

10. Machine de récolte selon l'une quelconque des revendications précédentes destinée à rouler les cultures en une botte cylindrique, ladite machine de récolte étant dotée d'un châssis, de moyens de ramassage destinés à ramasser les cultures étalées sur le sol et de moyens permettant de rouler les cultures ramassées en une botte, **caractérisée en ce que** ledit rouleau de guidage est un rouleau de guidage s'étirant sensiblement parallèlement à l'axe central de la botte devant être formée, lequel rouleau de guidage fait partie desdits moyens permettant de rouler les cultures ramassées en une botte.
